# EUROPÄISCHE PATENTSCHRIFT

(11) **EP 2 199 266 B1**
(45) Veröffentlichungstag und Bekanntmachung des Hinweises auf die Patenterteilung: **11.05.2016**
(21) Anmeldenummer: 08172099.7
(22) Anmeldetag: 18.12.2008
(51) Int. Cl.: C04B 35/32, C04B 35/40, C01G 49/00, C01G 51/00, H01F 1/11, H01F 41/02

(54) **HARTMAGNETISCHER WERKSTOFF**
Magnetically hard material
Matière active dure magnétique

(43) Veröffentlichungstag der Anmeldung: 23.06.2010
(60) Teilanmeldung: 13152546.1
(73) Patentinhaber: Tridelta Hartferrite GmbH, 07629 Hermsdorf (DE)
(72) Erfinder: Mikenda, Kevin, 07629 Hermsdorf (DE)
(74) Vertreter: Henkel, Breuer & Partner

(56) Entgegenhaltungen:
- WO-A-03/056578
- JP-A- 2001 223 104
- JP-A- 2002 353 021

## Beschreibung

Die Erfindung betrifft einen hartmagnetischen Werkstoff und daraus hergestellte Magnete. Insbesondere betrifft die Erfindung einen Strontiumferrit mit verbesserten magnetischen Eigenschaften.

Strontiumferrite der allgemeinen Formel SrFe₁₂O₁₉ werden seit langer Zeit als hartmagnetische Ferrite in großer Menge verwendet. Es ist bekannt, dass durch Zugabe verschiedener Elemente, wie etwa Kobalt und Lanthan die magnetischen Eigenschaften beeinflusst werden können. So werden zum Beispiel Kobalt für eine Erhöhung der Remanenz B_{R} und Lanthan für eine Erhöhung der Koerzitivfeldstärke H_{CJ} und der Bruchfestigkeit eingesetzt. Ein derartiger modifizierter Strontiumferrit hat die allgemeine Formel:

Sr₁₋ₓLaₓFe_{12-y}Co_{y}O₁₉

Wobei X = y = 0,01 - 1,00 bzw. X = 0,15 und y = x/1,6n bis = x/2,6n, n das eingesetzte Verhältnis Fe₂O₃ : SrO ist und einen Wert von 5-6 annehmen kann.

Außer der genauen Menge der jeweiligen Zusätze wird ein derartiger Ferrit stark durch das Herstellungsverfahren, insbesondere durch die Bedingungen beim Sintern, beeinflusst. So zeigt sich allgemein, dass eine Erhöhung der Sintertemperatur zu einer Erhöhung der Remanenz B_{R} und zu einer Abnahme der Koerzitivfeldstärke H_{CJ} führt. Umgekehrt wirkt sich eine niedrige Sintertemperatur positiv auf die Koerzitivfeldstärke H_{CJ} aus, senkt aber die Remanenz B_{R}. Derartige modifizierte Strontiumferrite sind unter anderem aus der WO 99/34376 A1, der EP 1465214 A1, der US 20040151661 A1 oder der WO 03/056578 A1 bekannt.

JP 2002 353021 und JP 2001 223104 offenbaren weitere modifizierte Strontiumferrite mit Kobalt und Lanthan.

Auch zeigt die EP 0964411 A1 einen modifizierten Strontiumferrit der obengenannten Form, bei dem x = y = 0,15 erfüllt ist. Dieser Strontiumferrit hat eine hohe Koerzitivfeldstärke H_{CJ} von 4500 Oe. Es sind keine Angaben über die Remanenz B_{R} gezeigt. Aus dieser Druckschrift ist ersichtlich, dass kleine Änderungen in den Anteilen des Kobalts, des Lanthans oder des Sauerstoffs zu beachtlichen Änderungen der magnetischen Eigenschaften führen. Auch lassen sich die magnetischen Eigenschaften dadurch beeinflussen, ob Lanthan und Cobalt dem Strontiumferrit vor dem Kalzinieren oder nach dem Kalzinieren zugegeben werden.

Aus der WO 98/03864 ist darüber hinaus ein derartiger modifizierter Strontiumferrit bekannt, wobei umfangreiche Untersuchungen zeigen, dass der Zusammenhang zwischen der Konzentration an Kobalt und Lanthan und den magnetischen Eigenschaften sehr komplex ist. Nach dieser Veröffentlichung ist ein modifizierter Strontiumferrit bevorzugt, bei dem der Anteil für Kobalt und Lanthan bei x = y = 0,3 liegt.

Aufgabe der Erfindung ist es daher, einen modifizierten Strontiumferrit bereitzustellen, der verbesserte magnetische Eigenschaften hat, insbesondere der eine hohe Remanenz B_{R} und gleichzeitig eine hohe Koerzitivfeldstärke H_{CJ} zeigt, und bei dem die Rechteckigkeit der Entmagnetisierungskurve (squareness), ausgedrückt durch H_{K}/H_{CJ}, hoch ist. H_{K} ist die Feldstärke, bei der die Remanenz irreversibel um 5% verkleinert wird.

Erfindungsgemäß wird ein derartiger modifizierter Strontiumferrit durch die Merkmale der Anspruchs 1 bestimmt. Die abhängigen Ansprüche betreffen weitere vorteilhafte Aspekte der Erfindung.

Im Folgenden werden Ausführungsformen der Erfindung anhand der beiliegenden Figuren detaillierter beschrieben. In den Figuren zeigen:
Figur 1 ein Ablaufdiagramm des Herstellungsverfahrens für den modifizierten Strontiumferrit der Erfindung;

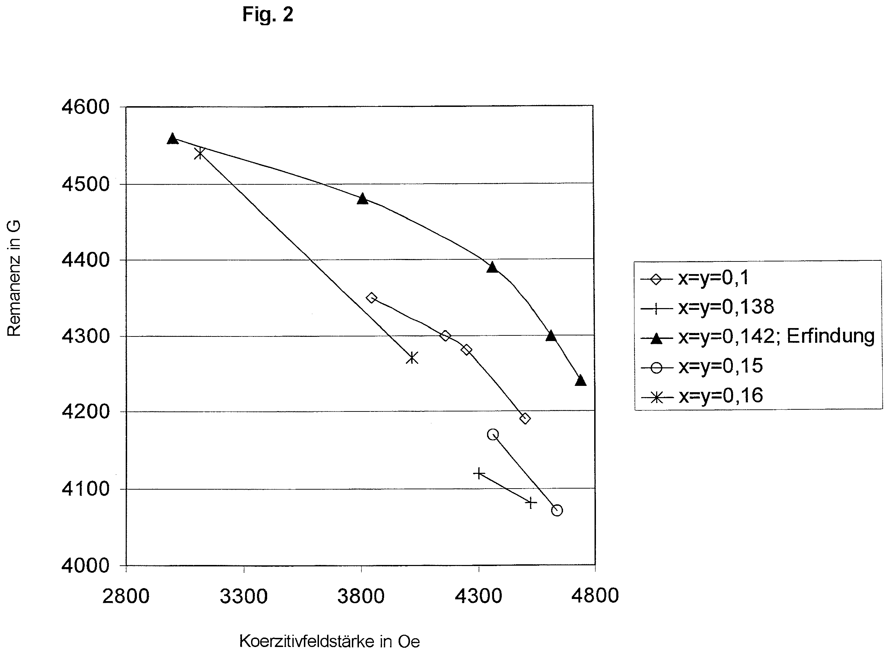

Figur 2 ein Diagramm zur Verdeutlichung der vorteilhaften magnetischen Eigenschaften des erfindungsgemäß modifizierten Strontiumferrits.

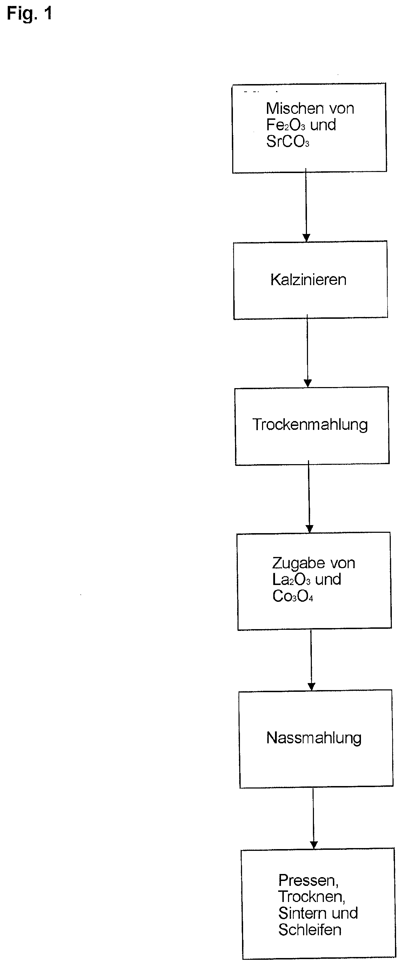

Wie es in Figur 1 gezeigt ist, wird der erfindungsgemäße modifizierte Strontiumferrit wie folgt hergestellt. In einem ersten Schritt wird ein Eisenoxyd mit einem Strontiumoxyd oder Strontiumcarbonat gemischt. Das so hergestellte Gemisch wird in einem zweiten Schritt bei einer Temperatur von 1300°C +/- 20°C kalziniert.

In einem dritten Schritt wird das kalzinierte Material trocken zerkleinert auf mittlere Teilchengrößen von 10 - 30 µm. Diesem Ferritpulver werden als Additive Lanthanoxid (La₂O₃) und Kobaltoxid (Co₃O₄) zugegeben.

Als nächster Schritt erfolgt eine Nassmahlung auf Teilchengrößen von 0,7 - 1,0 µm.

Diese Suspension wird im Magnetfeld gepresst, getrocknet und anschließend gesintert bei Temperaturen zwischen 1220 °C und 1250 °C, vorzugsweise zwischen 1225 °C und 1245 °C. Der infolge des Nassmahlens erhaltenen Suspension wird als Additive Lanthanoxyd (La₂O₃) und Kobaltoxyd (Co₃O₄) zugegeben.

In einem Magnetfeld wird dann der Rohling getrocknet, gepresst, und anschließend bei Temperaturen zwischen 1220°C und 1250°C, vorzugsweise zwischen 1225°C und 1245°C gesintert.

### Erstes Beispiel

Mit dem oben beschriebenen Verfahren wurde ein erstes erfindungsgemäßes Beispiel hergestellt. Hierzu wurde dem bereits kalzinierten und vorzerkleinerten Strontiumferrit bei der Nassmahlung Lanthanoxid und Kobaltoxidin einem vorgegebenen Mengenverhältnis beigegeben. Anschließend wurde die Suspension in einem Magnetfeld von 3.000 Oe gepresst, dann getrocknet und bei 1225 °C gesintert. Das fertige Produkt hatte dann eine Zusammensetzung der Formel Sr₁-ₓLaₓFe_{12-y}Co_{y}O₁₉, wobei x = y = 0,142 war.

Anschließend wurden die magnetischen Hauptkennwerte, nämlich die Remanenz B_{R} und die Polarisationskoerzitivfeldstärke H_{CJ} bei 23 °C gemessen. Die Messung erfolgte gemäß der Vorschrift DIN EN 60404 - 5.

Hierbei ergaben sich Werte für die Remanenz B_{R} von 4240 G, für das Koerzitivfeld H_{CJ} von 4738 Oe, und für das Verhältnis von H_{K} zu H_{CJ} von 88%.

### Zweites Beispiel

Das zweite Beispiel wurde identisch zu dem ersten Beispiel hergestellt, mit dem einzigen Unterschied, dass die Sintertemperatur nicht bei 1225°C, sondern bei 1230°C lag.

Der Wert für die Remanenz B_{R} lag bei 4300 G, der Wert für die Koerzitivfeldstärke H_{CJ} bei 4612 Oe, und das Verhältnis von H_{K} zu H_{CJ} lag bei 90%.

### Drittes Beispiel

Wiederum wurde identisch zu dem ersten und zweiten Beispiel ein modifizierter Strontiumferrit der gleichen Zusammensetzung vorbereitet. Die Sintertemperatur lag hierbei bei 1235°C. Der Wert der Remanenz B_{R} stellte sich auf 4390 G ein. Der Wert für das Koerzitivfeld H_{CJ} lag bei 4361 Oe. Das Verhältnis von H_{K} zu H_{CJ} lag bei 91%.

### Viertes Beispiel

In einem vierten Beispiel wurde nun eine Sintertemperatur von 1240°C auf einen identischen modifizierten Strontiumferrit angewendet. Der Wert der Remanenz B_{R} stiegt auf 4480 G, während die Koerzitivfeldstärke H_{CJ} auf 3808 Oe absank. Das Verhältnis von H_{K} zu H_{CJ} lag weiterhin bei 91%.

### Fünftes Beispiel

In einem fünften Beispiel wurde nun eine Sintertemperatur von 1245°C gewählt. Ein modifizierter Strontiumferrit der gleichen Zusammensetzung wie in den ersten vier Beispielen wurde hierzu verwendet. Der Wert der Remanenz B_{R} lag bei 4560 G. Der Wert für die Koerzitivfeldstärke H_{CJ} sank auf 3003 Oe. Das Verhältnis von H_{K} zu H_{CJ} betrug 92%.

Alle diese erfindungsgemäßen modifizierten Strontiumferrite zeigen eine ausgezeichnete squareness durch hohe Werte von H_{K} zu H_{CJ} bei gleichzeitig sehr hohen Werten für sowohl die Remanenz als auch für die Koerzitivfeldstärke H_{CJ}. Die so hergestellten Hartferrit-Magnete haben wesentlich bessere magnetische Eigenschaften als die konventionellen Strontiumferrit-Magnete.

### Erstes Vergleichsbeispiel

Zum Vergleich wurde nun ein modifizierter Strontiumferrit der Formel Sr₁₋ₓLaₓFe_{12-y}Co_{y}O₁₉ hergestellt, wobei x = y = 0,15 eingestellt wurde. Dieser modifizierte Strontiumferrit wurde ansonsten in der gleichen Art und Weise hergestellt, wie die erfindungsgemäßen Strontiumferrite, insbesondere wie der erfindungsgemäße Strontiumferrit des zweiten Beispiels. Die Sintertemperatur lag auch hier bei 1230°C.

Es stellte sich eine Remanenz B_{R} von 4070 G ein. Die Koerzitivfeldstärke H_{CJ} lag bei 4637 Oe. Das Verhältnis zwischen von H_{K} zu H_{CJ} sank auf 73%.

### Zweites Vergleichsbeispiel

Mit der gleichen Zusammensetzung des ersten Vergleichsbeispiels wurde wiederum ein modifizierter Strontiumferrit hergestellt, wobei die Sintertemperatur bei 1235°C lag. Der Wert der Remanenz B_{R} stellte sich bei 4170 G ein. Der Wert für die Koerzitivfeldstärke H_{CJ} betrug 4361 Oe. Das Verhältnis von H_{K} zu H_{CJ} lag bei 85%.

Erkennbar sind die Werte für die Remanenz bei dem ersten und zweiten Vergleichsbeispiel deutlich niedriger als bei den erfindungsgemäßen modifizierten Strontiumferriten. Auch ist das Verhältnis von H_{K} zu H_{CJ} deutlich schlechter.

### Drittes Vergleichsbeispiel

Wiederum wurde ein modifizierter Strontiumferrit nach dem gleichen Verfahren hergestellt, wie bei den erfindungsgemäßen Beispielen. Allerdings wurde hier vorgegeben, dass x = y = 0,1 gilt.

Bei einer Sintertemperatur von 1230°C bei diesem Vergleichsbeispiel stellten sich Werte für die Remanenz B_{R} von 4190 G, und für die Koerzitivfeldstärke H_{CJ} von 4499 Oe ein. Der Wert des Verhältnisses von H_{K} zu H_{CJ} lag bei 88%.

Erkennbar ist bei diesem Vergleichsbeispiel sowohl die Remanenz B_{R} als auch die Koerzitivfeldstärke H_{CJ} niedriger als bei dem erfindungsgemäßen Beispiel bei der gleichen Sintertemperatur.

### Viertes Vergleichsbeispiel

Mit der gleichen Zusammensetzung wie beim dritten Vergleichsbeispiel wurde wiederum ein modifizierter Strontiumferrit hergestellt. Die Sintertemperatur wurde auf 1240°C eingestellt. Der Wert der Remanenz B_{R} betrug 4300 G, und für die Koerzitivfeldstärke H_{CJ} ergaben sich 4159 Oe. Das Verhältnis von H_{K} zu H_{CJ} lag bei 90%.

Obwohl bei diesem Vergleichsbeispiel ein sehr guter Wert für die Koerzitivfeldstärke H_{CJ} erreicht wurde, lag die Remanenz B_{R} doch deutlich unter dem Wert des entsprechenden erfindungsgemäßen Beispiels.

### Fünftes Vergleichsbeispiel

Bei der gleichen Zusammensetzung wie bei dem dritten und vierten Vergleichsbeispiel wurde ein weiterer modifizierter Strontiumferrit hergestellt, und bei einer Temperatur von 1245°C gesintert. Der Wert der Remanenz B_{R} stellte sich mit 4350 G ein. Der Wert der Koerzitivfeldstärke H_{CJ} betrug 3845, und das Verhältnis von H_{K} zu H_{CJ} lag weiterhin bei 90%.

Der Vergleich des dritten bis fünften Vergleichsbeispiels mit den erfindungsgemäßen Ausführungsformen zeigt, dass erfindungsgemäß jeweils deutlich bessere Wertepaare für die Remanenz und die Koerzitivfeldstärke bei vergleichbar gutem Verhältnis von H_{K} zu H_{CJ} erreicht werden.

### Sechstes Vergleichsbeispiel

Bei dem sechsten Vergleichsbeispiel wurde ein modifizierter Strontiumferrit der Formel Sr₁₋ₓLaₓFe₁₂₋yCoyO₁₉ hergestellt, wobei x = y = 0,16 gewählt wurde.

Der so hergestellte Strontiumferrit wurde mit einer Temperatur von 1245°C gesintert. Die Remanenz B_{R} stellte sich auf einen Wert von B_{R} = 4540 G ein. Die Koerzitivfeldstärke H_{CJ} betrug 3116 Oe. Das Verhältnis von H_{K} zu H_{CJ} lag bei 94%.

Der so hergestellte modifizierte Strontiumferrit hat gute Werte für Remanenz und squareness, der Wert für die Koerzitivfeldstärke ist aber sehr viel kleiner als bei dem erfindungsgemäßen Beispiel.

### Siebtes Vergleichsbeispiel

Mit der gleichen Zusammensetzung wie beim sechsten Vergleichsbeispiel wurde wiederum ein modifizierter Strontiumferrit hergestellt, und mit 1235°C gesintert. Hierbei stellte sich die Remanenz auf einen Wert B_{R} = 4270 G ein. Der Wert für H_{CJ} betrug 4021 Oe. Das Verhältnis von H_{K} zu H_{CJ} lag bei 90%.

Es zeigt sich, dass bei dieser Zusammensetzung des Strontiumferrits gemäß Vegleichsbeispiel 6 und 7 die Abhängigkeit der magnetischen Eigenschaften von der Sintertemperatur sehr ausgeprägt ist. Dies führt dazu, dass schon bei kleineren Schwankungen der Sintertemperatur die vorteilhaften Eigenschaften nicht mehr gewährleistet werden können.

### Achtes Vergleichsbeispiel

Es wurde wiederum ein modifizierter Strontiumferrit der Formel Sr₁₋ₓLaₓFe₁₂-yCoyO₁₉ hergestellt. Der Wert für x = y wurde auf 0,138 eingestellt. Bei einer Sintertemperatur von 1230°C ergab sich ein Wert für die Remanenz B_{R} von 4080 G. Der Wert für H_{CJ} lag bei 4524 Oe. Das Verhältnis von H_{K} zu H_{CJ} lag bei 74%.

### Neuntes Vergleichsbeispiel

Mit der gleichen Zusammensetzung wie bei dem achten Vegleichsbeispiel, aber bei einer Sintertemperatur von 1235°C wurde ein neuntes Vergleichsbeispiel vermessen. Hier lag der Wert der Remanenz B_{R} bei 4120 G, während die Koerzitivfeldstärke H_{CJ} bei 4298 Oe lag. Das Verhältnis zwischen Remanenz B_{R} und Sättigungsmagnetisierung B_{S} war gleich 83%.

Obwohl die Zusammensetzung des modifizierten Strontiumferrits des achten und neunten Vergleichsbeispiels relativ nah bei den erfindungsgemäßen Ausführungsformen liegt, sind die Werte für die Remanenz B_{R}, die Koerzitivfeldstärke H_{CJ} und auch für das Verhältnis von H_{K} zu H_{CJ} bei gleichen Sintertemperaturen deutlich schlechter als bei der Erfindung. Überraschenderweise sind diese Werte auch deutlich schlechter als bei den dritten bis fünften Vergleichsbeispielen. Hieran zeigt sich, dass bereits kleine Änderungen der Zusammensetzung beachtliche Auswirkungen auf die magnetischen Eigenschaften haben können.

Bei den erfindungsgemäßen ersten bis fünften Beispielen zeigt sich über den gesamten Bereich der Sintertemperatur von 1225°C bis 1245°C, dass ein modifizierter Strontiumferrit mit hervorragenden Eigenschaften erhalten werden kann. Sowohl hinsichtlich der Remanenz B_{R}, als auch der der Koerzitivfeldstärke H_{CJ} wie auch des Verhältnisses Remanenz B_{R} und Sättigungsmagnetisierung B_{S} sind die erfindungsgemäß hergestellten Strontiumferrite ausgezeichnet und denen der Vergleichsbeispiele überlegen.

Insgesamt zeigt sich, dass es mit dem erfindungsgemäßen modifizierten Strontiumferrit möglich ist, bei einem Verhältnis von H_{K} zu H_{CJ} von 88% oder mehr ein Wertepaar für die Koerzitivfeldstärke H_{CJ} und die Remanenz B_{R} zu erreichen, dass der folgenden Gleichung genügt:

B_{R} G⁻¹ + 0,1844 * Oe⁻¹ * H_{CJ} ≥ 5100 .

Zur Übersicht zeigt Tabelle 1 die Zusammensetzung und die magnetischen Kennwerte der erfindungsgemäßen Ausführungsformen und der Vergleichsbeispiele. Tabelle 1

| | x=Y= | B_{R} in G | H_{CJ} in Oe | Sintertemperatur | H_{K} / H_{CJ} * 100 | B_{RG}⁻¹+ 0,1844 * Oe⁻¹ * H_{CJ} |
|---|---|---|---|---|---|---|
| **E1** | **0,142** | **4240** | **4738** | **1225** | **88** | **5113** |
| **E2** | **0,142** | **4300** | **4612** | **1230** | **90** | **5150** |
| **E3** | **0,142** | **4390** | **4361** | **1235** | **91** | **5194** |
| **E4** | **0,142** | **4480** | **3808** | **1240** | **91** | **5182** |
| **E5** | **0,142** | **4560** | **3003** | **1245** | **92** | **5113** |
| V1 | 0,150 | 4070 | 4637 | 1230 | 73 | 4925 |
| V2 | 0,150 | 4170 | 4361 | 1235 | 85 | 4974 |
| V3 | 0,100 | 4190 | 4499 | 1230 | 88 | 5019 |
| V4 | 0,100 | 4300 | 4159 | 1240 | 90 | 5066 |
| V5 | 0,100 | 4350 | 3845 | 1245 | 90 | 5059 |
| V6 | 0,160 | 4540 | 3116 | 1245 | 94 | 5059 |
| V7 | 0,160 | 4270 | 4021 | 1235 | 90 | 5011 |
| V8 | 0,138 | 4080 | 4524 | 1230 | 74 | 4914 |
| V9 | 0,138 | 4120 | 4298 | 1235 | 83 | 4912 |

## Patentansprüche

1. Modifizierter Strontiumferrit der allgemeinen Formel
Sr₁₋ₓLaₓFe_{12-y}Co_{y}O₁₉,
**dadurch gekennzeichnet, dass**
0,14 ≤ x ≤ 0,145;
0,14 ≤ y ≤ 0,145.

2. Modifizierter Strontiumferrit nach Anspruch 1, **dadurch gekennzeichnet, dass** x = y = 0,142 erfüllt ist.

3. Modifizierter Strontiumferrit nach Anspruch 1 oder 2, **dadurch gekennzeichnet, dass**
B_{R} ≥ (5100 - 0,1844 * Oe⁻¹ * H_{CJ}) G;
wobei B_{R} die Remanenzmagnetisierung in G ist, wobei H_{CJ} die Koerzitivfeldstärke in Oe ist.

4. Modifizierter Strontiumferrit nach einem der Ansprüche 1 bis 3, **dadurch gekennzeichnet, dass** das Verhältnis von H_{K} zu H_{CJ} > 88%, vorzugsweise >90% ist.

5. Hartmagnetischer Gegenstand, **dadurch gekennzeichnet, dass** er aus einem modifizierten Strontiumferrit nach einem der Ansprüche 1 bis 4 hergestellt wurde.

6. Verfahren zur Herstellung eines modifizierten Strontium ferrits nach einem der Ansprüche 1 bis 4, **gekennzeichnet durch** die Schritte:
Vorlegen einer Mischung aus Eisenoxyd und Strontiumcarbonat;
Kalzinieren der Mischung bei einer Temperatur von 1300°C +/- 20°C;
Trockenes Vorzerkleinern des kalzinierten Strontiumferrits;
Beimischen von Lanthanoxid und Kobaltoxid in einer vorgegebenen Menge;
Nassmahlen des kalzinierten Strontiumferrits mit den Additiven Lanthanoxid und Kobaltoxid bis zu einer Teilchengröße im Bereich 0,7 - 1,0 µm;
Pressen im Magnetfeld, Trocknen und Sintern des so gewonnenen Rohlings bei einer Temperatur im Bereich zwischen 1220°C und 1250°C, vorzugsweise zwischen 1225°C und 1245°C;
**dadurch** gekennzeichnet, dass
Lanthanoxyd und Kobaltoxyd in einer solchen Menge hinzugegeben werden, dass bei dem fertigen gesinterten modifizierten Strontiumferrit sich eine Zusammensetzung gemäß folgender Formel ergibt: Sr₁₋ₓLaₓFe_{12-y}Co_{y}O₁₉;
wobei 0,14 ≤ x ≤ 0,145; und
0,14 ≤ y ≤ 0,145.

7. Verfahren zur Herstellung eines modifizierten Strontiumferrits nach Anspruch 6, **dadurch gekennzeichnet, dass** Lanthanoxyd (La₂O3) und Kobaltoxyd (Co₃O₄) nach dem Kalzinierungsschritt beigemischt werden.

## Claims

1. Modified strontium ferrite of the general formula
Sr₁₋ₓLaₓFe_{12-y}Co_{y}O₁₉,
**characterized in that**
0.14 ≤ x ≤ 0.145;
0.14 ≤ y ≤ 0.145.

2. Modified strontium ferrite according to Claim 1, **characterized in that** x = y = 0.142 is fulfilled.

3. Modified strontium ferrite according to Claim 1 or 2, **characterized in that**
B_{R} ≥ (5100 - 0.1844 * Oe⁻¹ * H_{CJ}) G;
in which B_{R} is the remanent magnetization in G, H_{CJ} being the coercive force in Oe.

4. Modified strontium ferrite according to any of Claims 1 to 3, **characterized in that** the ratio of H_{K} to H_{CJ} is > 88%, preferably > 90%.

5. Magnetically hard article, **characterized in that** it was produced from a modified strontium ferrite according to any of Claims 1 to 4.

6. Process for the preparation of a modified strontium ferrite according to any of Claims 1 to 4, **characterized by** the steps:
initial introduction of a mixture of iron oxide and strontium carbonate;
calcination of the mixture at a temperature of 1300°C +/- 20°C;
precomminution of the calcined strontium ferrite in the dry state;
admixing of lanthanum oxide and cobalt oxide in a specified amount;
wet milling of the calcined strontium ferrite with the additives lanthanum oxide and cobalt oxide to a particle size in the range of 0.7 - 1.0 µm;
pressing in a magnetic field, drying and sintering of the blank thus obtained, at a temperature in the range between 1220°C and 1250°C, preferably between 1225°C and 1245°C;
**characterized in that**
lanthanum oxide and cobalt oxide are added in an amount such that, in the prepared sintered modified strontium ferrite, a composition according to the following formula results:
Sr₁₋ₓLaₓFe_{12-y}Co_{y}O₁₉,
in which 0.14 ≤ x ≤ 0.145; and
0.14 ≤ y ≤ 0.145.

7. Process for the preparation of a modified strontium ferrite according to Claim 6, **characterized in that** lanthanum oxide (La₂O₃) and cobalt oxide (Co₃O₄) are admixed after the calcination step.

## Revendications

1. Ferrite de strontium modifiée de formule générale Sr₁₋ₓLaₓFe_{12-y}Co_{y}O₁₉, **caractérisée en ce que**
0,14 ≤ x ≤ 0,145 ;
0,14 ≤ y ≤ 0,145.

2. Ferrite de strontium modifiée selon la revendication 1, **caractérisée en ce que** la relation x = y = 0,142 est satisfaite.

3. Ferrite de strontium modifiée selon la revendication 1 ou 2, **caractérisée en ce que**
B_{R} ≥ (5100 - 0,1844 * Oe⁻¹ * H_{CJ}) G ;
B_{R} étant la magnétisation de rémanence dans G, H_{CJ} étant l'intensité du champ coercitif dans Oe.

4. Ferrite de strontium modifiée selon l'une quelconque des revendications 1 à 3, **caractérisée en ce que** le rapport de H_{K} à H_{CJ} est > 88%, de préférence > 90%.

5. Objet magnétique dur, **caractérisé en ce qu'**il a été produit à partir d'une ferrite de strontium modifiée selon l'une quelconque des revendications 1 à 4.

6. Procédé pour la préparation d'une ferrite de strontium modifiée selon l'une quelconque des revendications 1 à 4, **caractérisé par** les étapes :
disposition au préalable d'un mélange d'oxyde de fer et de carbonate de strontium ;
calcination du mélange à une température de 1300°C +/- 20°C ;
broyage préalable, à sec, de la ferrite de strontium calcinée ;
addition, en mélangeant, d'oxyde de lanthane et d'oxyde de cobalt en une quantité prédéfinie ;
broyage, à l'état humide, de la ferrite de strontium calcinée avec les additifs oxyde de lanthane et oxyde de cobalt jusqu'à une grosseur de particule dans la plage de 0,7-1,0 µm ;
compression dans un champ magnétique, séchage et frittage de l'ébauche ainsi obtenue à une température dans la plage entre 1220°C et 1250°C, de préférence entre 1225°C et 1245°C ;
**caractérisé en ce que** l'oxyde de lanthane et l'oxyde cobalt sont ajoutés en une quantité telle qu'on obtient, pour la ferrite de strontium modifiée frittée finie, une composition selon la formule suivante :
Sr₁₋ₓLaₓFe_{12-y}Co_{y}O₁₉,
dans laquelle
0,14 ≤ x ≤ 0,145 ; et
0,14 ≤ y ≤ 0,145.

7. Procédé pour la préparation d'une ferrite de strontium modifiée selon la revendication 6, **caractérisé en ce que** l'oxyde de lanthane (La₂O₃) et l'oxyde de cobalt (Co₃O₄) sont ajoutés en mélangeant après l'étape de calcination.
